# EUROPEAN PATENT APPLICATION

(11) **EP 0 710 587 A1**
(43) Date of publication of application: **08.05.1996**
(21) Application number: 95307794.8
(22) Date of filing: 01.11.1995
(51) Int. Cl.: B60R 9/048

(54) **Rack**

(30) Priority: 07.11.1994 CA 19942135315; 18.11.1994 GB 19940023284
(71) Applicant: Burgess, Maximillian Edward, Lingfield, Surrey RH7 6JN (GB); Stack, Martin Orvile, Richmond, British Columbia V6V 1J7 (CA)
(72) Inventor: Burgess, Maximillian Edward, Lingfield, Surrey RH7 6JN (GB); Stack, Martin Orvile, Richmond, British Columbia V6V 1J7 (CA)
(74) Representative: Downing, Michael Philip, et al

(57) **Abstract**

An article carrier is disclosed, suitable for affixing to a vehicle, having a generally horizontal carrier bar (14) with at least one receiving means (24) for an elongate article or elongate part of an article therealong, comprising a strap (32) at one end attached to a ratcheted reel (34) on the carrier bar (14), so that the strap (32) can be drawn along the bar (14) against the ratchet past the or each receiving means (24) to an attachment point of the strap (32), and means for allowing rotation of the reel (34) within the ratchet thereby to enable the strap (32) to be tightened against an elongate part placed in the receiving means (24). The elongate part could be a ski or skis, or the cross-bar or other part of a bicycle. Several receiving (24) means can be provided. A suitable receiving means (24) is a V-shaped trough (26), particularly with retaining hooks on either side. In preferred forms of the invention, the strap (32) is detachably attachable to an attachment point on the carrier, to permit articles to be loaded and unloaded more easily.

## Description

The present invention relates to a rack, especially to a rack for cycles or skis attachable to a vehicle. Known cycle racks are generally hung on a rearface of a vehicle by a suitable arrangement of hooks. There is a rudimentary receptacle for the cycle, which locates the cycle relative to the rear of the vehicle. Separate lashing devices are then used to secure the cycle to the rack firmly, for example bungee cords.

A search in respect of the present invention revealed the following United States Patents:
4,676,414 Deguevara, for Article Carrier;
5,303,857, Hewson, for Swing-Down Bicycle Carrier for Vehicles;
5,190,195, Fullhart et al, for Hitch Mounted Bicycle Rack;
5,181,822, Allsop et al, for Articulated Support Rack for Vehicles;
5,094,373, Lovci, for Sports Equipment Rack for Vehicle.

Deguevara shows a vehicle mounted bicycle rack having a telescoping locking arm for securing a bicycle bar between the locking arm and a first tubular member connected to a vertical support column. Hewson, Full-hart et al, and Allsop et al all teach bicycle racks for attachment to vehicles, which bicycle racks have vertical support columns which may be pivoted about their base so as to lower the normally vertical support column so as to bring the normally horizontal bicycle support arms closer to the ground. Hewson provides a clamping arrangement for clamping bicycle bars between upper and lower horizontal clamping members. Fullhart et al discloses a clamp arm lockably pivotable about the vertical support column which when locked in a horizontal alignment clamps a bicycle bar into secure resting engagement with a pair of hook rods extending horizontally from the bicycle rack frame. Allsop et al teaches an arrangement by which bicycle support arms remain substantially horizontal as vertical support members of the rack are pivoted about their base.

Lovci teaches a vehicle mountable bicycle rack which may be pivoted horizontally about a hinged pair of cooperating horizontally extending arms so as to swing the rack and any bicycle mounted thereon in a horizontal arc away from the rearward end of the vehicle so as to allow access to a rear door on the vehicle.

The present invention seeks to provide a better rack which is complete in itself in that additional lashing means are not necessary, and onto which it is easier to load eg a cycle or cycles.

The present invention therefore provides, in its first aspect, an article carrier for affixing to a vehicle, having a generally horizontal carrier bar with at least one receiving means for an elongate article or elongate part of an article therealong, comprising a strap at one end attached to a ratcheted reel on the carrier bar, so that the strap can be drawn along the bar against the ratchet past the or each receiving means to an attachment point for the strap, and means for allowing rotation of the reel within the ratchet thereby to enable the strap to be tightened against an elongate part placed in the receiving means.

Preferably, there is more than one receiving means, enabling a plurality of articles to be carried on the rack.

The receiving means can be movable, to accommodate varying widths of article.

The receiving means can comprise a simple V-shaped trough. Preferably either side of the lips of the trough are retaining hooks for the strap, which will ideally be disposed level with or lower than the lips of the trough to give a more positive retention action. Thus, the cross-bar of the cycle can be placed in the V-shaped trough with the strip looping through a retaining hook, over the cross-bar, and through the opposed retaining hook.

Generally, it will be preferred if the strap can be detached from its attachment point, to permit articles to be loaded and unloaded more easily. The attachment point can thus be a simple hook and eye arrangement.

The means for allowing rotation of the reel will preferably give a large mechanical advantage in that rotation, in order to give a high tension in the strap. A simple lever is sufficient.

In its second, independent, aspect, the present invention provides an external rack for attachment to a vehicle, comprising a base releasably mountable on a vehicle, a generally vertical member having an upper portion and a lower end, mountable on said base at said lower end, a generally horizontal member mountable on said generally vertical member at its upper portion, a frame adapted for fitment around said generally horizontal member, said frame adapted to support an elongate object thereagainst and slideably positionable along said generally horizontal member, a selectively tensionable strap releasably mountable to said generally horizontal member, extending along said generally horizontal member and positionable over said slidable frame, whereby said selectively tensionable strap may be selectively tensioned to releasably frictionally hold an elongate object against said slidable frame and to simultaneously releasably frictionally secure said slidable frame against said generally horizontal member.

Preferably, the rack further comprising means for slidably lockably positioning said generally horizontal member on said upper portion of said generally vertical member in releasably mountable engagement with said upper end, whereby said generally horizontal member is slidably lockably positioned on said upper end of said generally vertical member. Still more preferably, the means for slidably lockably positioning said generally horizontal member on said upper end will also comprise means for releasably mounting said generally horizontal member in a first orientation longitudinally rearward of said vehicle and for releasably mounting said generally horizontal member in a second orientation transversely behind said vehicle. Ideally, the means for slidably lock-ably positioning said generally horizontal member on said upper end of said generally vertical member comprises a sleeve mounted to said upper end of said generally vertical member through which the generally horizontal member may be journalled. The means for releasably mounting said generally horizontal member in a first orientation longitudinally rearward of said vehicle and for releasably mounting said generally horizontal member in a second orientation transversely behind said vehicle can in that case comprise first and second substantially orthogonally aligned sleeves mounted to said upper end of said generally vertical member, each of said first and second sleeves sized to receive said generally horizontal member when journalled therethrough.

Selective tensioning of the strap can be achieved by means of a ratchet mechanism mounted on said generally horizontal member. The strap will preferably be a resilient strap mountable on said generally horizontal member.

An embodiment of the present invention will now be described, by way of example, with reference to the accompanying drawings, in which;
Figure 1 is a view from the side of a cycle rack being a first embodiment of the present invention;
Figure 2 is a view on arrow A of Figure 1;
Figure 3 is a view in cross-section of a receiving means of Figure 1;
Figure 4 is a view in cross-section of a component of the receiving means;
Figure 5 shows an assembly of components as shown in Figure 4 to produce part of the receiving means;
Figure 6 shows, in cross-section, a receiving means of a bicycle rack according to the present invention, in use;
Figure 7 shows, in perspective, a rack being a second embodiment of the present invention, in a first arrangement;
Figure 8 shows the rack of Figure 7 in a second arrangement; and
Figure 9 shows the rack of Figure 7 in a third arrangement, adapted to carry skis.

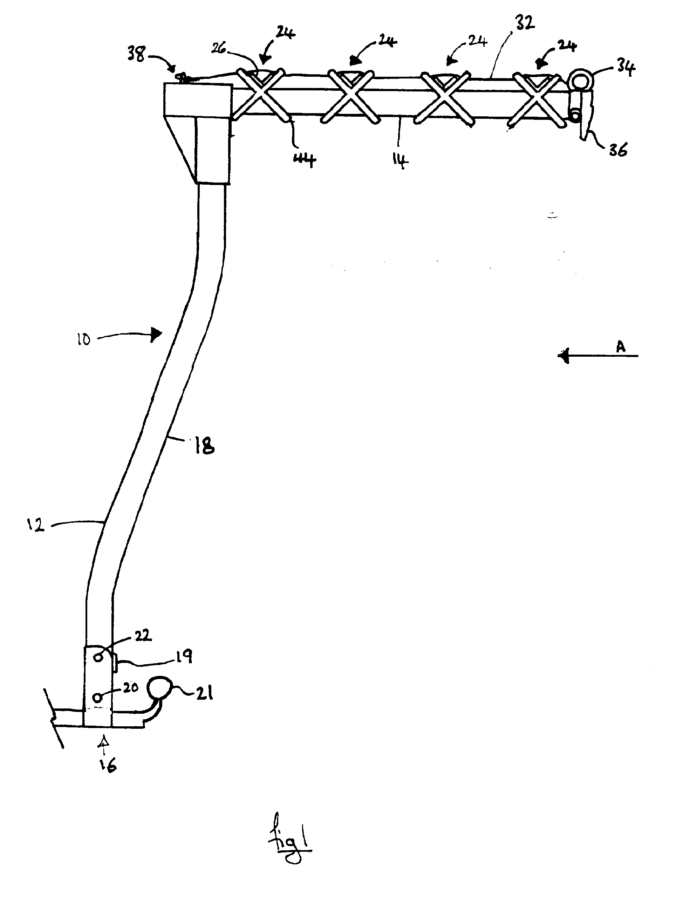

Figure 1 shows a cycle rack 10 according to the present invention. The cycle rack 10 comprises three main sections; the supporting post 12, the horizontal carrier bar 14 and the base mounting section 16. The base section 16 is adapted to be fixed to, e.g., a tow bar of a vehicle, and from the base section 16 extends generally upwardly the supporting post 12. At the top of the supporting post 12, the carrier bar 14 extends generally horizontally, away from the vehicle. Thus, bicycles suspended on the carrier bar 14 are held behind the vehicle.

The supporting post 12 is angled such that access to the rear of the vehicle is not obstructed, even when the cycle rack is installed and fully loaded with cycles. In the operational position (shown) the supporting post 12 is initially vertical at its junction with the base section 16, but then comprises a curved portion curving away from the vehicle and leading to a straight portion 18 at an inclined angle. At the upper end of the supporting post 12, there is a further curved portion to bring the top end of the supporting post back to vertical. Thus, the supporting post 12 is kept away from the normal arc of rotation of a normal hatchback door, thereby allowing access to the rear of the vehicle.

This may be contrasted with the known cycle rack, in which the rack is affixed to a rear door of the vehicle, meaning that the weight of the cycle rack and any cycles mounted on it must be lifted in order to open that door.

The base section 16 comprises a pair of pins 20 and 22 passing through aligned holes in the base section 16 and supporting post 12. Pin 20 is fixed and provides a pivot between the base section 16 and supporting post 12 which allows the supporting post 12 to be rotated freely about the base section 16, fixed to the vehicle. This allows the cycle rack to be rotated down, bringing the carrier bar 14 closer to the ground and allowing cycles to be loaded more easily. The supporting post 12 can be fixed in the operational position by inserting pin 22, which though removable acts as a locating pin. In the embodiment shown in Figure 1, the cycle rack 10 is attached to a towbar and a stop 19 is attached to the supporting post 12 to abut against the towhook 21 in the lowered position and hold the rack 10 in that position.

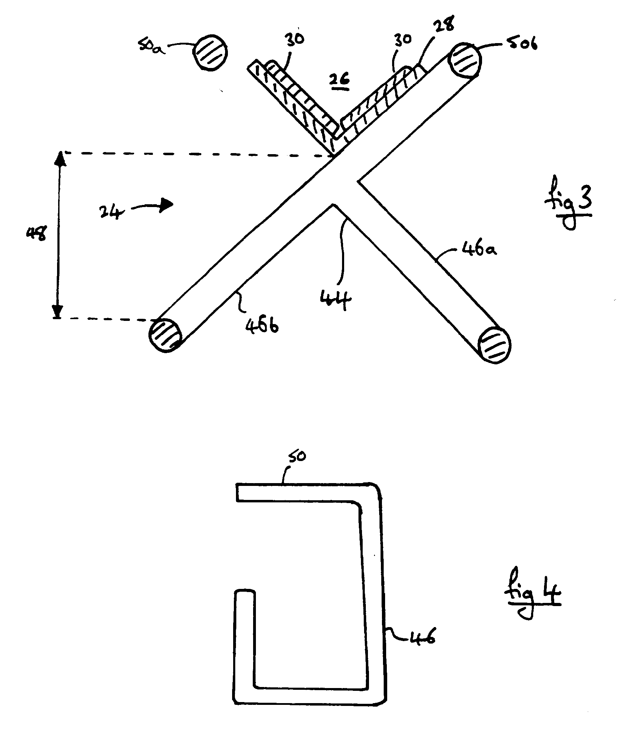

As noted previously, the carrier bar 14 extends generally horizontally. Along the carrier bar 14 are a number of receiving means 24, placed at intervals therealong. The receiving means 24 are slidable along the carrier bar 14 to accommodate cycles of various width. Each receiving means provides a trough 26 in which a cycle bar e.g. a cross-bar of a cycle, can be located. The trough 26 is formed of a V-profile steel member (28:Fig 3) lined with rubber gripping pads (30:Fig 3). The detailed construction of each receiving means 26 is described later with reference to Figure 3.

A strap 32 runs from a reel 34 attached at the end of the carrier bar 14. The reel 34 is rotatable by a mechanical lever 36, under the control of a ratchet (not shown). Thus, rotation of the lever 36 in an anticlockwise direction as shown in Figure 1 results in the strap being taken up by the reel 34 under control of the ratchet. The strap 32 can be withdrawn from the reel 34 by disengaging the ratchet and pulling the strap 32.

In use, the strap 32 is led along the top of the carrier bar 14, engaging in each receiving means 24 and securing the cycle therein. The loose end of the strap 32 can be connected to an attachable point 38 by a hook and eye arrangement.

Thus, to secure a cycle or cycles in the rack, the strap is disconnected at the attachable point, if necessary, and lifted away from the carrier bar. The cycle or cycles are each placed in a receiving means, and the strap is withdrawn from the reel (if necessary), threaded through each receiving means, and attached at the attachment point. The lever is then operated to reel in the strap, and the mechanical advantage afforded by the lever, in conjunction with the ratchet allows the strap to be drawn taut. This retains each cycle in its receiving means firmly, by pressing the cycle part onto the rubber lining.

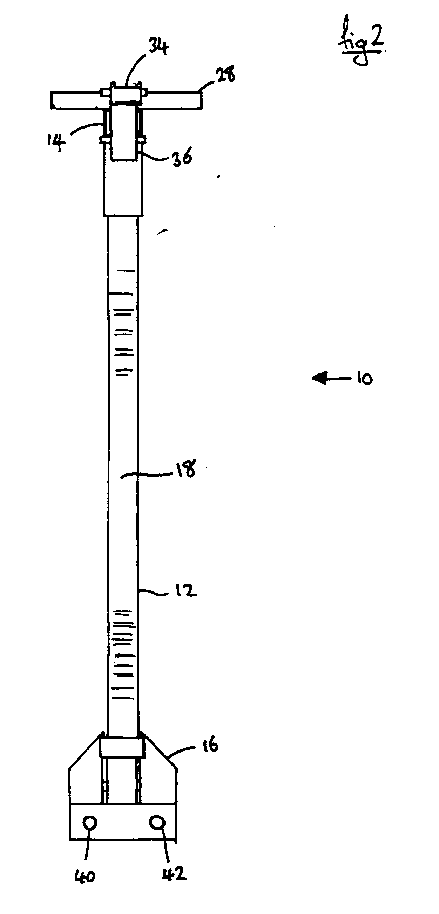

Figure 2 shows a view of the cycle rack from arrow A on Figure 1. It can be seen that at the base portion 2 there is provision for two fixing points 40 and 42 for attaching the cycle rack to a vehicle.

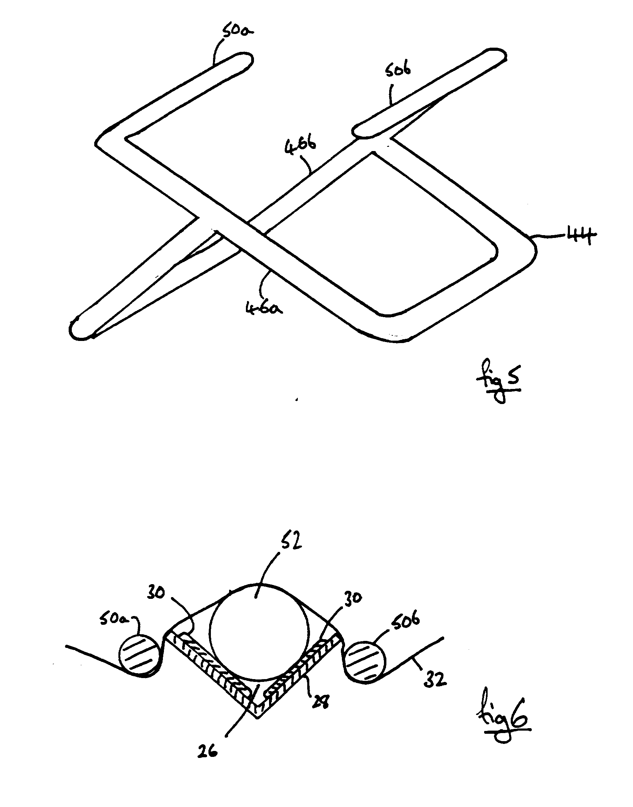

Figure 3 shows one of the receiving means in cross-section. Each receiving means 24 comprises a V-shaped trough 28 for receiving the cross-bar of a cycle, and a supporting structure 44 for the trough. The supporting structure is formed from two generally G-shaped members 46a and 46b fixed together at right angles to form, in profile, an X. The open parts of the G are, in this embodiment, located each on the upper arms of the X but on transversely opposed sides of the structure, as shown in Figure 5. Thus, after the V-shaped trough has been fixed in the upper part of the Xtoform the receiving means, there is defined a generally rectangular section aperture 48 through which the carrier bar can pass, together with an upper trough 28 bounded by oppositely-directed hooks 50a and 50b formed by the upper part of each G-section 46a and 46b.

Figure 4 shows a plan view of each G-section, and Figure 5 shows how they are assembled prior to attachment of the V-shaped trough.

Figure 6 shows a cross-section of the receiving means 24 to show the arrangement of the strap 32 in use. The strap is passed below the retaining hook 50b formed by the upper part of the G-section 46b, above the lip of the V-shaped trough 28, and over the cross-bar 52 of the cycle before passing over the opposing lip of the V-shaped trough 28 and under the retaining hook 50a formed by the upper part of the G-section 46a.

Whilst the above description represents the presently preferred versions of the invention, the skilled person will readily appreciate that many modifications may be made to the above-described embodiment without departing from the scope of the present invention. In particular, the reel 34 and associated ratchet and lever 36 may be located at the end of the carrier bar 14 closest to the vehicle, with corresponding movement of the attachment point 38. It is intended that all such modifications be comprehended by the present invention.

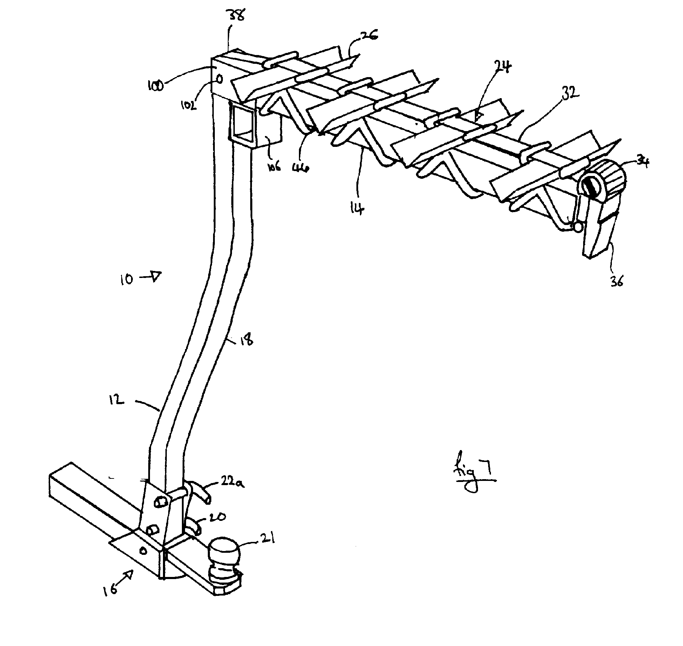

Figure 7 to 9 show an alternative embodiment to the first. This embodiment is substantially similar to the first, and only those aspects which differ will be described.

In particular, at the foot of the carrier bar, the attachment means is generally similar but is arranged to conform to the standard trailer bar fitting common in the North American Continent. Furthermore, the pin 22 is displaced as pin 22a and instead of passing through the vertical bar 12, instead holds it against a rear plate (not shown). Pin 20 remains as a removable pivot pin.

At the point where the carrier bar 14 meets the upright support bar 12, instead of a welded arrangement, the upright support bar 12 carries a horizontally directed box into which the carrier bar 14 is a snug fit. The carrier bar 14 is inserted within the box 100 such that an alignment hole 102 in the box 100 aligns with the similar alignment hole (104) not visible in Figure 7. A locking pin (not shown) is inserted to prevent longitudinal sliding of carrier bar 14.

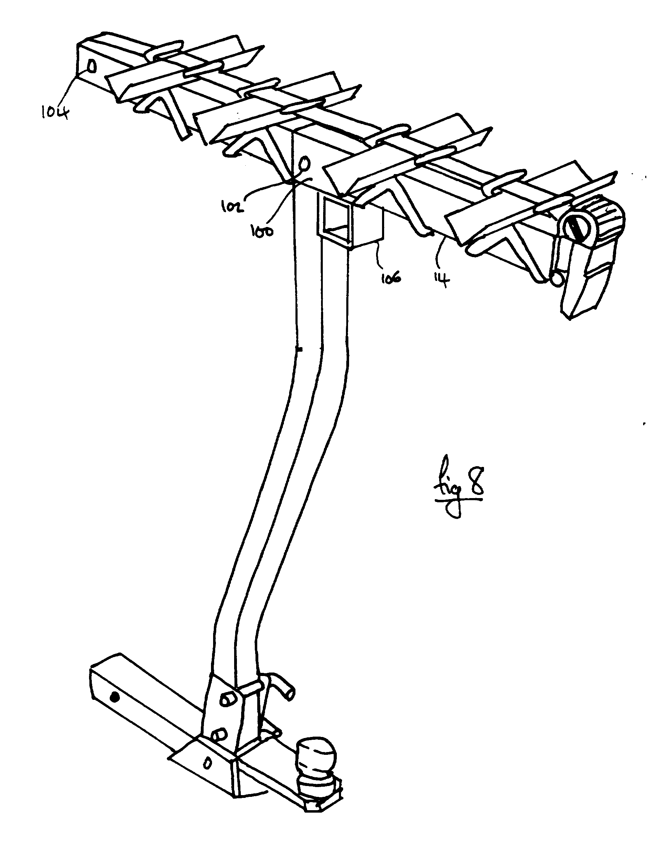

As shown in Figure 8, the carrier bar 14 can be slid further into the box 100 until the alignment hole 102 is aligned a further hole (not visible) in the carrier bar 14, roughly mid-way therealong. The carrier bar can then be locked in this alternative position in the same way. This position might be used if, for example, few cycles were to be carried, or if they were to be loaded in a balanced arrangement, or if the rack was being used in conjunction with a high-sided trailer.

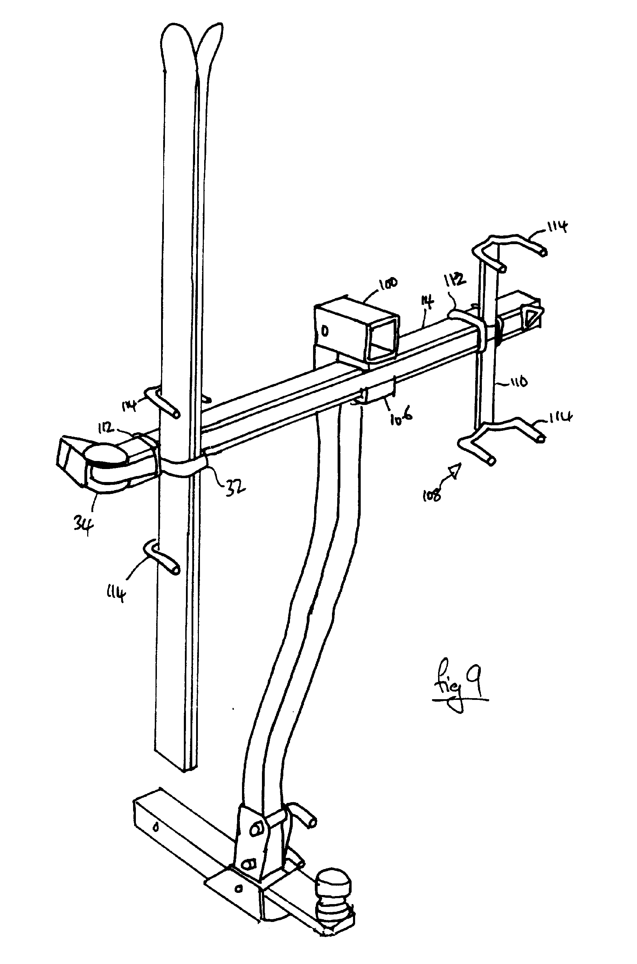

Fixed to the underside of the horizontal box 100 is a transversely arranged box 106. Figure 9 shows the carrier bar inserted through the transverse box 106. In use it is locked by a similar locking pin arrangement (not shown). In this arrangement, the trough members 24 are removed, and replaced by ski receptacles 108. These comprise a transverse member 110 held to the carrier bar 14 by loops 112. At either end of the transverse bar 110 are ski receptacles 114 which comprise generally C-shaped members. To load a pair of skis, these skis are placed in the receptacle between the extending arms of the C, and the band 32 is passed behind the loops 112, over the skis, and tightened using the ratchet 34 as before.

It will be appreciated by the skilled person that alterations are equally possible to the present embodiment. For example, it is possible to attach the ski receptacles 110 with the carrier bar 14 in the position shown in Figures 7 and 8.

## Claims

1. An article carrier for affixing to a vehicle, having a generally horizontal carrier bar with at least one receiving means for an elongate article or elongate part of an article therealong, comprising a strap at one end attached to a ratcheted reel on the carrier bar, so that the strap can be drawn along the bar against the ratchet past the or each receiving means to an attachment point for the strap, and means for allowing rotation of the reel within the ratchet thereby to enable the strap to be tightened against an elongate part placed in the receiving means.

2. An article carrier according to claim 1 wherein there is more than one receiving means, enabling a plurality of articles to be carried on the carrier.

3. An article carrier according to claim 1 or claim 2 wherein the receiving means is movable along the carrier bar.

4. An article carrier according to any preceding claim wherein the receiving means comprises a V-shaped trough.

5. An article carrier according to claim 4 wherein at either side of the lips of the trough are retaining hooks for the strap.

6. An article carrier according to claim 5 wherein the retaining hooks are disposed level with or lower than the lips of the trough, thereby to provide a positive retention action.

7. An article carrier according to any preceding claims wherein the strap is detachably attachable to an attachment point on the carrier.

8. An article carrier according to claim 7 wherein the attachment point is a hook and eye arrangement.

9. An external rack for attachment to a vehicle, comprising a base releasably mountable on a vehicle, a generally vertical member having an upper portion and a lower end, mountable on said base at said lower end, a generally horizontal member mountable on said generally vertical member at its upper portion, a frame adapted for fitment around said generally horizontal member, said frame adapted to support an elongate object thereagainst and slideably positionable along said generally horizontal member, a selectively tensionable strap releasably mountable to said generally horizontal member, extending along said generally horizontal member and positionable over said slidable frame, whereby said selectively tensionable strap may be selectively tensioned to releasably frictionally hold an elongate object against said slidable frame and to simultaneously releasably frictionally secure said slidable frame against said generally horizontal member.

10. A rack according to claim 10 further comprising means for slidably lockably positioning said generally horizontal member on said upper portion of said generally vertical member in releasably mountable engagement with said upper end, whereby said generally horizontal member is slidably lockably positioned on said upper end of said generally vertical member.

11. A rack according to claim 10 wherein the means for slidably lockably positioning said generally horizontal member on said upper end also comprises means for releasably mounting said generally horizontal member in a first orientation longitudinally rearward of said vehicle and for releasably mounting said generally horizontal member in a second orientation transversely behind said vehicle.

12. A rack according to claim 10 or claim 11 wherein the means for slidably lockably positioning said generally horizontal member on said upper end of said generally vertical member comprises a sleeve mounted to said upper end of said generally vertical member through which the generally horizontal member may be journalled.

13. A rack according to claim 12 wherein the means for releasably mounting said generally horizontal member in a first orientation longitudinally rearward of said vehicle and for releasably mounting said generally horizontal member in a second orientation transversely behind said vehicle comprises first and second substantially orthogonally aligned sleeves mounted to said upper end of said generally vertical member, each of said first and second sleeves sized to receive said generally horizontal member when journalled therethrough.
